# FASCICULE DE BREVET EUROPEEN

(11) **EP 3 076 453 B1**
(45) Date de publication et mention de la délivrance du brevet: **13.09.2017**
(21) Numéro de dépôt: 16163287.2
(22) Date de dépôt: 31.03.2016
(51) Int. Cl.: H01M 2/02, H01M 10/052, H01M 10/0585, B32B 37/02, B32B 37/12, B32B 38/10

(54) **DISPOSITIF ÉLECTROCHIMIQUE, TEL QU'UNE MICROBATTERIE OU UN SYSTÈME ÉLECTROCHROME, RECOUVERT PAR UNE COUCHE D'ENCAPSULATION COMPRENANT UN FILM BARRIÈRE ET UN FILM ADHÉSIF, ET PROCÉDÉ DE RÉALISATION D'UN TEL DISPOSITIF**
ELEKTROCHEMISCHE VORRICHTUNG, WIE MIKROBATTERIE ODER ELEKTROCHROMSYSTEM, DIE MIT EINER EINKAPSELUNGSSCHICHT UMGEBEN IST, DIE EINE ABDICHTFOLIE UND EINE KLEBEFOLIE UMFASST, UND HERSTELLUNGSVERFAHREN EINER SOLCHEN VORRICHTUNG
ELECTROCHEMICAL DEVICE, SUCH AS A MICROBATTERY OR AN ELECTROCHROMIC SYSTEM, COVERED WITH AN ENCAPSULATION LAYER COMPRISING A BARRIER FILM AND AN ADHESIVE FILM, AND METHOD FOR MANUFACTURING SAME

(30) Priorité: 31.03.2015 FR 1552698
(43) Date de publication de la demande: 05.10.2016
(73) Titulaire: Commissariat à l'Energie Atomique et aux Energies Alternatives, 75015 Paris (FR)
(72) Inventeur: BEDJAOUI, Messaoud, 38340 Voreppe (FR); POULET, Sylvain, 38110 Saint Victor de Cessieu (FR); SEBASTIEN, Thomas, 38950 St Martin le Vinoux (FR)
(74) Mandataire: Talbot, Alexandre

(56) Documents cités:
- EP-A1- 2 166 609
- FR-A1- 3 009 437
- KR-A- 20120 076 187

## Description

### Domaine technique de l'invention

L'invention est relative à un dispositif électrochimique, tel qu'une microbatterie ou un système électrochrome, recouvert par une couche d'encapsulation comprenant un film barrière et un film adhésif, et procédé de réalisation d'un tel dispositif.

### État de la technique

Les microbatteries sont définies comme étant des générateurs électrochimiques tout solide formés par un empilement actif de couches minces qui constituent les électrodes (positive et négative) séparées par un électrolyte.

L'électrode positive est formée dans un matériau ayant une bonne conductivité ionique, par exemple l'oxysulfure de titane (TiOS) ou un oxyde de métal lithié, comme LiCoO₂, LiNiO₂, LiMn₂O₄.
L'électrolyte est un isolant électrique ayant une forte conductivité ionique tel que l'oxynitrure de lithium et de phosphore (LiPON), le LiSON, le LiBON, le Li₂SO₄, le LiNbO₃...
Enfin, la nature de l'électrode négative varie en fonction de la technologie de la microbatterie. Dans les microbatteries dites « lithium-ion », l'électrode négative est constituée d'un matériau lithié, c'est-à-dire un matériau dans lequel est inséré des ions lithium. Dans les microbatteries « lithium-métal », l'électrode négative est exclusivement formée de lithium.

L'empilement de la batterie est complété par des collecteurs de courant anodique et cathodique.

Cependant, les matériaux contenant du lithium sont très sensibles à l'air, et en particulier à l'oxygène et à l'humidité. Pour éviter qu'ils s'oxydent, ils doivent être recouverts d'un système d'encapsulation inerte et étanche. La maîtrise de l'encapsulation est un facteur primordial qui conditionne l'efficacité dans le temps des microbatteries.

La mise en oeuvre de ces systèmes d'encapsulation peut être réalisée de deux manières différentes : l'encapsulation en couches minces, appelée aussi encapsulation monolithique, et l'encapsulation par élément rapporté, appelée aussi encapsulation hétérogène.
Dans le cas d'encapsulation monolithique, les couches d'encapsulation sont directement déposées sur le dispositif électrochimique.
L'encapsulation hétérogène est une solution basée sur le report d'un capot étanche vis-à-vis de l'atmosphère. Ce dernier cas est considéré comme l'une des solutions les plus robustes pour protéger efficacement les microbatteries au lithium en raison de sa facilité de mise en oeuvre, son faible coût et ses performances. Dans cette technologie, le système d'encapsulation est réalisé séparément avant de le reporter sur les couches actives de la microbatterie.

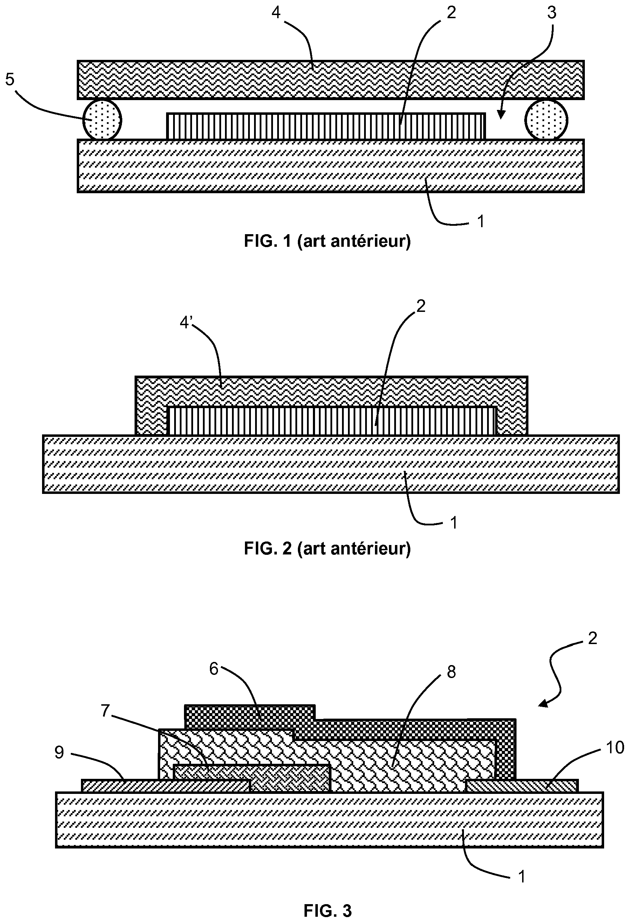

La figure 1 représente schématiquement une microbatterie au lithium munie d'un système d'encapsulation par élément rapporté, tel que décrit dans le document US2008/0003493.
La microbatterie comprend un empilement 2 de couches actives, formé sur un substrat 1. L'empilement 2 est contenu dans une cavité 3 délimitée par le substrat 1 et par un capot 4 faisant face au substrat. Le capot est, par exemple en verre, en céramique ou en métal. Un cordon 5 de matériau adhésif, comme de l'époxy, solidarise le capot 4 au substrat 1, autour de l'empilement de couches actives 2.

Pour assurer simultanément le maintien du capot 4 sur le substrat, le cordon de colle 5 occupe une vaste zone autour de l'empilement 2. Une surface importante du substrat est ainsi dédiée à la cavité 3 et au cordon de scellement 5, au détriment de la surface utile de la microbatterie.
Dans un autre exemple de ce document, illustré à la figure 2, le capot 4' est formé d'un empilement de trois couches, deux couches en polymère enserrant une couche métallique. Le capot est disposé sur le substrat et est solidarisé au substrat par laminage. Le document FR3009437 divulgue une microbatterie au lithium comprenant un empilement 2 de couches actives déposées sur un substrat et un capot de protection 8 couvrant l'empilement de couches actives. Le capot de protection est fixé à l'empilement de couches actives au moyen d'une couche de colle 10' et une couche tampon en alumine 14 est disposée entre l'empilement de couches actives et la couche de colle. la couche tampon permet de bloquer la diffusion des ions lithium et est inerte chimiquement vis-à-vis des constituants des couches actives. Pour former des batteries en grande quantité, un réseau de microbatteries est formé sur un unique substrat. Un cordon d'adhésif est disposé autour de chaque empilement de couches actives, puis un capot est formé sur chaque empilement. La résine est ensuite polymérisée pour solidariser les capots au substrat.
Dans les procédés existants, chaque microbatterie élémentaire est donc encapsulée de manière individuelle. Or, les substrats supportant les microbatteries peuvent comporter de quelques dizaines à quelques milliers de composants unitaires.
Actuellement, ces procédés d'encapsulation par collage de capot unitaire ne sont pas adaptés pour produire un grand volume de microbatterie.
Cette problématique est également retrouvée dans les systèmes électrochromes. Les dispositifs électrochromes, ou électrochromiques, sont des dispositifs qui se colorent sous l'action d'un champ électrique.
Les dispositifs présentent une architecture similaire aux microbatteries : ils comportent une électrode active et une contre-électrode séparées par un électrolyte. L'électrode active est classiquement composée d'un matériau électrochromique en mesure d'insérer, réversiblement et simultanément, des ions et des électrons.
L'insertion des ions doit être réversible afin d'obtenir des dispositifs présentant une bonne stabilité en cyclage.
Les couches actives doivent également être protégées des éléments atmosphériques par un système d'encapsulation.

On constate qu'il existe un besoin de prévoir une microbatterie au lithium ou un système électrochrome à l'encombrement réduit, avec un dispositif d'encapsulation performant et compact et pouvant être utilisé pour produire des dispositifs à forte cadence.

### Objet de l'invention

L'invention a pour but de remédier aux inconvénients de l'art antérieur et, en particulier, de proposer un dispositif électrochimique, tel qu'une microbatterie ou un système électrochrome, présentant un dispositif d'encapsulation performant et compact et un procédé de réalisation d'un tel dispositif, ledit procédé pouvant être utilisé pour produire des dispositifs en grande quantité.

Cet objet est atteint par un dispositif électrochimique, tel qu'une microbatterie ou un système électrochrome, comprenant au moins un empilement de couches actives contenant du lithium,
ledit empilement comprenant au moins une première électrode reliée à un premier collecteur de courant et au une moins seconde électrode reliée à un second collecteur de courant,
ledit empilement étant disposé sur un substrat et étant recouvert d'une couche d'encapsulation.
La couche d'encapsulation comporte au moins :
- un film barrière présentant au moins une face électriquement isolante et comprenant au moins une couche étanche vis-à-vis des espèces oxydantes,
- un film adhésif, muni d'une première face et d'une deuxième face, la première face étant en contact avec la face électriquement isolante du film barrière et la seconde face recouvrant l'empilement de couches actives et une partie du substrat,
le film adhésif comprenant une juxtaposition de bandes électriquement conductrices adhésives et de bandes électriquement isolantes adhésives, deux bandes électriquement conductrices étant séparées par une bande électriquement isolante pour être isolées électriquement l'une de l'autre, chaque bande électriquement conductrice étant connectée au premier collecteur de courant ou au second collecteur de courant de l'empilement de couches actives.

Cet objet est également atteint par un procédé de réalisation d'un dispositif électrochimique, tel qu'une microbatterie ou un système électrochrome, comprenant les étapes successives suivantes :
- fournir un substrat sur lequel est disposé au moins un empilement de couches actives, ledit empilement comprenant au moins une première électrode reliée à un premier collecteur et au moins une seconde électrode reliée à un second collecteur,
- fournir un film barrière et un film adhésif
   o le film barrière présentant au moins une face électriquement isolante et comprenant au moins une couche étanche vis-à-vis des espèces oxydantes,
   o le film adhésif étant muni d'une première face et d'une deuxième face,
      le film adhésif comprenant une juxtaposition de bandes électriquement conductrices adhésives et de bandes électriquement isolantes adhésives,
      deux bandes électriquement conductrices étant séparées par une bande électriquement isolante pour être isolées électriquement l'une de l'autre,
- solidariser le film barrière et le film adhésif avec le substrat, de manière à encapsuler l'empilement de couches actives, le film barrière et le film adhésif formant une couche d'encapsulation,
la première face du film adhésif étant en contact avec la face électriquement isolante du film barrière et la seconde face du film adhésif étant destinée à être en contact en partie avec le substrat,
le film adhésif recouvrant l'empilement de couches actives et une partie du substrat,
chaque bande de matériau électriquement conducteur étant connectée aux premier ou second collecteurs de l'empilement de couches actives.

### Description sommaire des dessins

D'autres avantages et caractéristiques ressortiront plus clairement de la description qui va suivre de modes particuliers de réalisation de l'invention donnés à titre d'exemples non limitatifs et représentés aux dessins annexés, dans lesquels :
- les figures 1 et 2 représentent, de manière schématique, en coupe, des microbatteries au lithium selon l'art antérieur,
- la figure 3 représente de manière schématique, et en coupe, une microbatterie,
- les figures 4 et 5 représentent de manière schématique et en vue de dessus plusieurs microbatteries disposées sur un substrat, selon différents modes de réalisation,
- la figure 6 représente de manière schématique, en coupe, une couche d'encapsulation selon un mode de réalisation particulier de l'invention,
- les figures 7 à 9 représentent, de manière schématique et en coupe, plusieurs microbatteries recouvertes par une couche d'encapsulation selon différents modes de réalisation,
- la figure 10 représente de manière schématique, en vue de dessus, une couche d'encapsulation selon un mode de réalisation particulier de l'invention,
- la figure 11 représente de manière schématique et en vue de dessus plusieurs microbatteries, disposées sur un même substrat et recouvertes par une couche d'encapsulation selon un mode de réalisation de l'invention,
- la figure 12 représente, de manière schématique et en coupe, deux microbatteries recouvertes par une couche d'encapsulation selon un mode particulier de réalisation.

### Description d'un mode de réalisation préférentiel de l'invention

Le procédé de réalisation d'un dispositif électrochimique, tel qu'une microbatterie ou un système électrochrome, comprend les étapes successives suivantes :
(i) fournir un substrat 1 sur lequel est disposé au moins un empilement de couches actives 2 contenant du lithium, ledit empilement comprenant au moins une première électrode reliée à un premier collecteur de courant et au moins une seconde électrode reliée à un second collecteur de courant,
(ii) fournir un film barrière 11 et un film adhésif 12
   o le film barrière 11 présentant au moins une face électriquement isolante et comprenant au moins une couche étanche vis-à-vis des espèces oxydantes,
   o le film adhésif 12, étant muni d'une première face et d'une deuxième face,
(iii) optionnellement, former des ouvertures traversantes 19 à travers le film barrière 11,
(iv) solidariser le film barrière 11 et le film adhésif 12 avec le substrat, de manière à encapsuler l'empilement de couches actives 2,
   la première face du film adhésif étant en contact avec la face électriquement isolante du film barrière 11 et la seconde face du film adhésif étant destinée à être en contact en partie avec le substrat,
   le film barrière 11 et le film adhésif 12 formant une couche d'encapsulation 13.

Avantageusement, le film adhésif 12 recouvre continument l'empilement de couches actives 2 et une partie du substrat 1.
De préférence, l'interface entre le film barrière 11 et le substrat 1 forme un anneau continu autour de l'empilement de couches actives 2.

L'étape (i) nécessite de fournir un substrat sur lequel est disposé au moins un empilement de couches actives 2 contenant du lithium, i.e. une microbatterie dépourvue de couche d'encapsulation 13.
La figure 3 représente schématiquement une microbatterie au lithium. La microbatterie comprend classiquement un empilement 2 de couches actives déposées sur une face d'un substrat 1.
L'empilement de couches actives 2 comprend au moins une première électrode et une seconde électrode : une électrode négative 6 (anode) et une électrode positive 7 (cathode).
L'électrode positive 7 est formée d'une couche en matériau d'insertion du lithium, tel que TiOS, TiS₂, LiTiOS, LiTiS₂, LiCoO₂, V₂O₅....
L'anode 6 est formée d'un matériau constitué exclusivement de lithium métallique (batterie Li-métal) ou d'un matériau d'insertion (NiO₂, SnO, Si, Ge, C...) lithié (batterie lithium-ion).

L'empilement de couches actives 2 comprend également une couche d'électrolyte 8 située entre les deux électrodes.

La couche d'électrolyte 8 est, de préférence, constituée d'oxynitrure de lithium et de phosphore (LiPON). Elle pourrait également être en LiPONB, LiSiCON.

La couche d'encapsulation 13 vise à protéger les couches actives de l'oxydation, et plus particulièrement l'électrode 6 située en haut de l'empilement de couches actives 2, à l'opposé du substrat 4.
L'électrode supérieure est en effet la couche active la plus exposée aux espèces oxydantes. C'est aussi celle qui, en général, contient le plus de lithium, à savoir l'anode. Cette configuration particulière des électrodes rend encore plus critique l'étape d'encapsulation.

La microbatterie comporte également des collecteurs de courant : un collecteur de courant cathodique 9 et un collecteur de courant anodique 10. Les collecteurs de courant sont de nature métallique (Titane, Or, Aluminium platine, tungstène par exemple) et disposés sur le substrat hôte 1.
Le substrat hôte 1 peut être en silicium, en verre, ou tout autre type de matériaux adaptés comme support pour la réalisation des microbatteries.

L'empilement peut être réalisé toute technique connue par l'homme du métier.

Le procédé d'encapsulation peut être réalisé sur une seule microbatterie. Il peut également être utilisé pour encapsuler simultanément plusieurs microbatteries : plusieurs empilements de couches actives, disposés sur un même substrat hôte 1, sont encapsulés simultanément par une même couche d'encapsulation.
Les microbatteries peuvent être disposées de manière à être connectée en parallèle ou en série.

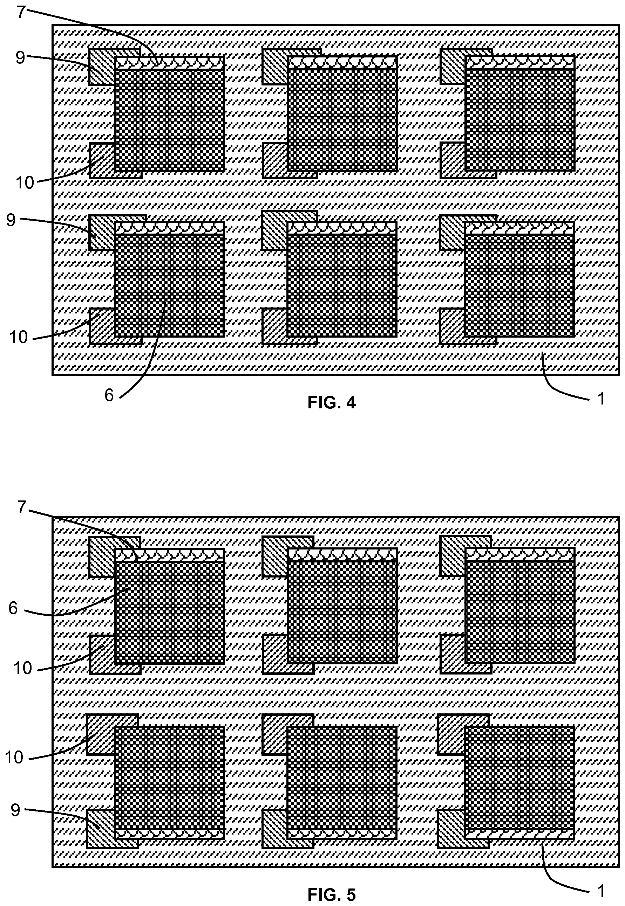

La figure 4 est une représentation schématique, en vue de dessus, d'un dispositif électrochimique comportant plusieurs empilements de couches actives 2 (ici un groupe de six batteries) disposés sur un même substrat hôte 1.

Les empilements de couches actives 2 sont disposés dans un même plan parallèle à la surface du substrat. Les empilements ne sont pas superposés les uns aux autres selon un axe perpendiculaire à la surface du substrat.

Les empilements de couches actives peuvent être connectés en parallèle : la première bande électriquement conductrice connecte les premiers collecteurs de courant des empilements de couches actives et la seconde bande électriquement conductrice connecte les second collecteurs de courant des empilements de couches actives.
Par exemple, une première bande électriquement conductrice peut être disposée de manière à connecter uniquement les collecteurs de courant anodiques des empilements de couches actives.
Une seconde bande électriquement conductrice peut être disposée de manière à connecter uniquement les collecteurs de courant cathodiques des empilements de couches actives.

Selon un autre mode de réalisation, le dispositif électrochimique comporte plusieurs empilements de couches actives, de manière à former des microbatteries disposées en série (figure 5).
Chaque bande électriquement conductrice connecte un premier collecteur de courant d'un empilement de couches actives avec un deuxième collecteur de courant d'un autre empilement. Par exemple, une bande électriquement conductrice peut connecter un collecteur de courant anodique d'un premier empilement de couches actives avec un collecteur de courant cathodique d'un second empilement de couches actives.

Ces configurations sont données à titre illustratif. Un nombre différent de microbatteries peut être utilisé.

L'étape (ii) consiste à fournir le film barrière 11 et le film adhésif 12.

Le film barrière 11 et le film adhésif 12, une fois assemblés, formeront la couche d'encapsulation 13.

Ces films sont formés et/ou assemblés indépendamment de la formation des couches actives sur le substrat.

Le film barrière 11 est électriquement isolant et comprend au moins une couche étanche vis-à-vis des espèces oxydantes.
Le film barrière 11 est, avantageusement choisi, à la fois pour ces propriétés barrière mais également pour ces propriétés mécaniques.
Il peut s'agir d'un film monocouche, i.e. le film barrière est formé d'une seule couche.
Selon un mode de réalisation préférentiel, le film barrière 11 est un film multicouche : il est formé d'un empilement de couches de natures différentes. L'empilement de couches est orienté selon un axe perpendiculaire à la surface du substrat 1.

La ou les couches formant le film barrière 11 sont, avantageusement, en métal ou en matériau diélectrique.
Ces matériaux présentent de bonnes propriétés barrières aux éléments oxydants présents dans l'atmosphère (H₂O, N₂, O₂).
Les performances de la barrière de protection sont définies par le taux de perméation des espèces oxydantes. Pour les microbatteries au lithium, le niveau barrière recherché se situe généralement entre 10⁻⁴ et 10⁻⁵ g/m²/jour.
Le niveau barrière est, avantageusement, inférieur à 10⁻⁴ g/m²/jour.

Lorsque le film barrière 11 est un film monocouche, le matériau diélectrique est, par exemple, du verre, une céramique, du mica ou encore n'importe quel matériau diélectrique pouvant être réalisé en couche mince et pouvant former une barrière aux espèces oxydantes.

Avantageusement, un film barrière monocouche en verre, mica ou céramique, par exemple, joue le rôle de capot. De tels capots peuvent être réalisés sous forme de bandes présentant des épaisseurs inférieures à 50*µ*m. De telles épaisseurs sont, avantageusement, compatibles avec les procédés de laminage.

Dans le cas d'un empilement de plusieurs couches, la première couche du film barrière est une couche en matériau diélectrique.
Par première couche du film barrière, on entend la couche disposée entre le film adhésif 12 et les autres couches de l'empilement du film barrière 11.

Dans le cas où le film barrière comporte au moins 2 couches, le film barrière comprend, avantageusement, une couche barrière en métal, tel que de l'aluminium, et une couche isolante, par exemple, en polymère pour, avantageusement, isoler la couche en métal du film adhésif.
La couche isolante ne présente pas forcément des propriétés de barrière espèces oxydantes.

Les couches minces métalliques peuvent être couplées à des couches minces en matériau thermoplastiques.
Les couches minces, ou feuilles minces, métalliques présentent avantageusement de bonnes propriétés barrières contre les espèces oxydantes.
Les couches minces métalliques sont, par exemple, en matériau à base d'aluminium ou à base d'acier, éventuellement revêtu d'une ou de plusieurs couches d'alliage (fer blanc, fer noir, fer chromé, acier inoxydable,...).

Avantageusement, les couches minces en matériau thermoplastique renforcent la tenue mécanique du film barrière 11.
Les polymères thermoplastique sont, préférablement, choisis parmi les PEN (polyethylènenaphtalate), PP (polypropylène), PET (polyéthylènetéréphtalate), PC (Polycarbonate), PI (Polyimide), PES (polyethersulphone). Il peut encore s'agir d'un autre polymère adapté à des structures multicouches.
Selon un autre mode de réalisation, ces polymères peuvent être revêtus par une ou plusieurs couches externes (aluminium, cuivre, argent, SiOₓ, AlOₓ,...) ou par une ou plusieurs couches internes (inclusion de charges minérales, ajouts d'absorbeurs d'oxydants).
Le revêtement des polymères vise à améliorer les propriétés barrières des polymères vis-à-vis des oxydants. Les propriétés thermiques sont également améliorées. L'ensemble polymère/revêtement peut ainsi résister à des températures allant jusqu'à 200°C, autorisant l'utilisation d'un plus grand nombre de procédés d'assemblage.

Les épaisseurs des différentes couches minces métalliques et des couches minces en matériau thermoplastiques sont, avantageusement, inférieures à 300*µ*m.
Avantageusement, l'épaisseur des couches adhésives est au moins égale à l'épaisseur de l'empilement de couches actives 2.

Selon un mode de réalisation préférentiel, le film barrière 11 de la couche d'encapsulation 13 est obtenu par procédé de laminage d'une couche mince en PET, d'une épaisseur de 15 *µ*m, sur une couche mince en aluminium, d'une épaisseur de 15*µ*m.

L'autre partie formant la couche d'encapsulation 13 est un film adhésif 12.
La partie adhésive a pour rôle d'assurer la connexion par collage direct du film barrière 11 sur le substrat hôte 1 contenant les composants à encapsuler.
En plus de son rôle d'adhésif, la partie adhésive en matériau polymère absorbe, avantageusement, les variations de volume de la microbatterie lors des cycles de charge et de décharge.

La partie adhésive du système d'encapsulation présente une épaisseur de quelques microns à quelques dizaines de microns. Ces épaisseurs relativement fines permettent, avantageusement, de recouvrir totalement les flancs de la microbatterie et de limiter la diffusion latérale des oxydants. Cette diffusion est particulièrement réduite avec les bandes électriquement conductrices, formées de couches polymère dopées par ajout d'inclusions métalliques renforçant les propriétés barrière des polymères.
L'épaisseur de la partie adhésive est également choisie en fonction de la topographie de surface des composants à encapsuler.

Le film adhésif est, préférentiellement, formé d'une juxtaposition de bandes électriquement conductrices 16 adhésives et de bandes électriquement isolantes 17 adhésives, selon un axe qui est parallèle à la surface du substrat qui supporte l'empilement. Selon les modes de réalisation, le film adhésif peut être parallèle au substrat ou substantiellement parallèle au substrat. Le film adhésif peut ne pas être parallèle au substrat mais les bandes électriquement conductrices et électriquement isolantes s'alternent suivant un axe parallèle à la surface du substrat.
Par juxtaposition, on entend que les bandes sont disposées les unes à côté des autres, qu'elles ne se chevauchent pas et qu'il n'y a pas d'espace entre les bandes, de manière à former un film continu.
Les bandes électriquement isolantes et les bandes électriquement conductrices sont alternées, selon une direction parallèle à la surface du substrat 1.
Au moins une première et une seconde bandes de matériau électriquement conducteur sont séparées par au moins une bande de matériau électriquement isolant.
La première et la seconde bande de matériau électriquement conducteur sont électriquement isolées l'une de l'autre.

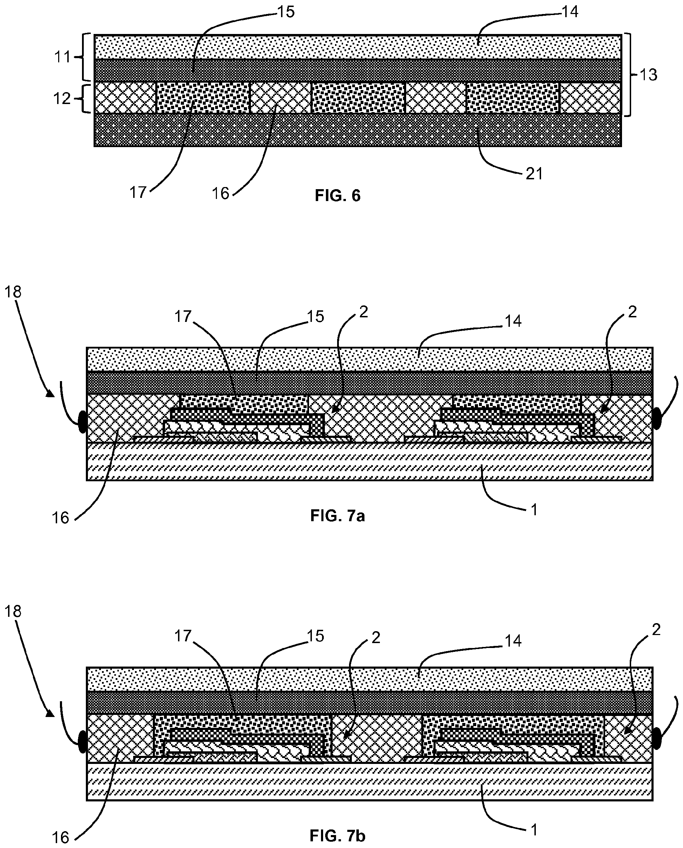

La figure 6 est une représentation schématique du principe de juxtaposition des bandes électriquement conductrices 16 et des bandes électriquement isolantes 17.
D'autres architectures, agencements de bandes électriquement conductrices 16 et isolantes peuvent être envisagés. A titre d'exemple, les bandes 16 et/ou 17 peuvent être biseautées de plusieurs façons différentes.

L'agencement des bandes électriquement conductrices 16 et des bandes électriquement isolantes 17 doit être réalisée de manière à faire correspondre une partie ou la totalité des bandes électriquement conductrices 16 avec une partie ou la totalité des plages des collecteurs de courant 9, 10 des composants à protéger.
Chaque bande de matériau électriquement conducteur est connectée au premier ou second collecteur de courant de l'empilement.
Il y a donc au moins une première et une seconde bandes de matériau électriquement conducteur et adhésif qui sont connectées, respectivement, à la première électrode et à la seconde électrode de l'empilement de couches actives 2 via les collecteurs de courant.

Les bandes électriquement conductrices 16 et isolantes sont choisies non seulement pour leurs propriétés de collage et d'adhésion mais aussi pour leurs compatibilités chimique et mécanique avec les couches du film barrière 11 de la couche d'encapsulation 13.
La force d'adhésion est, par exemple, entre 1N/cm et 10N/cm.

Les bandes électriquement isolantes 17 et conductrices possèdent, avantageusement, des épaisseurs identiques ainsi que des propriétés d'élasticité et thermique équivalentes voire identiques afin d'augmenter la durée de vie du dispositif. Par identique, on entend jusqu'à 5% près.

Les bandes électriquement isolantes 17 ont une résistivité électrique supérieure à 10⁹Ω.m. Elles peuvent être obtenues à partir de films polymères thermoplastiques (polyéthylène, polyimide...) ou thermodurcissables (silicone, époxyde...), par traitement UV ou thermique par exemple.

Les bandes électriquement conductrices 16 ont une conductivité électrique supérieure à 10²S.m⁻¹. La bande conductrice est, de préférence, en polymère conducteur. Encore plus préférentiellement, la bande électriquement conductrice est en polymère conducteur adhésif.
Le polymère conducteur peut être intrinsèquement conducteur. Dans ce cas, il est, avantageusement, choisi parmi le polyacétylène, le polythiophène, le polypyrole, le polysulfure de phénylène.
Selon une autre alternative, le polymère conducteur est formé à partir d'un polymère isolant dopé avec des charges métalliques (argent, cuivre, platine..) ou carbonées conductrices.

Selon un mode de réalisation particulier, les parties adhésives présentent des propriétés adhésives sur les deux faces principales, i.e. la première face destinée à être en contact avec le film barrière 11 et la seconde face destinée à être en contact avec le substrat.
Ce mode de réalisation est préférable dans le cas où les films barrière et adhésif sont assemblés par laminage. Les parties adhésives, isolantes ou conductrices, peuvent être, par exemple, sous la forme de rubans double face à base d'acrylique, de silicone, de caoutchouc ou d'un mélange de ces matières.

A titre d'exemple, il est possible d'utiliser les adhésifs conducteurs Tesa60260 d'une épaisseur de 25*µ*m couplés avec les adhésifs isolants Tesa61562 d'une épaisseur de 25*µ*m pour réaliser, respectivement, les bandes électriquement conductrices 16 et isolantes de la partie adhésive. Ces adhésifs sont commercialisés par la société Tesa.

D'autres types de rubans adhésifs peuvent être employés pour élaborer les parties adhésives des systèmes d'encapsulation. Nous pouvons citer, à titre indicatif et non exhaustif, les adhésifs commercialisés par Henkel : Ablefilm ECF550, Ablefilm ECF561E, Ablefilm 563K, etc ou commercialisés par 3M : 1007N, 8006C, 3007, 9703...
Les polymères adhésifs peuvent être également des polymères sensibles à la pression (Pressure sensitive Adhesive).
Le choix des matériaux est réalisé de manière à obtenir une bonne compatibilité chimique entre les bandes adhésives et les couches actives des composants à encapsuler.

Par exemple, dans le cas de composants de surface réelle 1cmx1cm, espacés de 1mm sur des wafers de 200mm, les bandes électriquement isolantes présentent une largeur et une longueur de 0,8cmx20cm et les bandes électriquement conductrices présentent une largeur et une longueur de 0,5cmx20cm.

Selon un mode de réalisation particulier, le film adhésif comprend des pièges d'espèces oxydantes telles que par exemple l'eau (« getters » en anglais).
Ces pièges peuvent être employés dans la fabrication des bandes électriquement conductrices 16 et/ou des bandes électriquement isolantes 17, Les matériaux desdits pièges peuvent être, par exemple, mélangés aux matériaux formant lesdites bandes.
A titre exhaustif et non limitatif, les getters peuvent être constitués d'un matériau choisi parmi les zéolites, la silice, l'alumine, les oxydes de métaux alcalins, les métaux ou leurs alliages. La réalisation des getters peut être adaptée selon les procédés de réalisation des bandes électriquement isolantes et électriquement conductrices. Les getters peuvent se trouver sous forme de fil, de ruban, de poudres ou de couches minces. Au niveau du procédé de mise en oeuvre, l'homme du métier peut choisir entre les différentes techniques de l'état de l'art comme par exemple les procédés de dépôt par centrifugeuse, le dépôt par voie sol gel ou par les autres procédés de dépôt de couches minces (dépôt chimique en phase vapeur (CVD), dépôt physique en phase vapeur (ou PVD)...).

Comme indiqué précédemment, la couche d'encapsulation 13 est formée par le film barrière 11 et par l'adhésif 12 qui est lui-même formé par des bandes électriquement isolantes 17 et électriquement conductrices 16. Dans un mode de réalisation particulier, les propriétés barrières des bandes électriquement conductrices sont différentes des propriétés barrières des bandes électriquement isolantes. Il est alors avantageux de modifier l'agencement des bandes 16 et 17 de manière à former un adhésif 12 qui permet d'avoir des performances barrière améliorées en complexifiant les chemins de diffusion latérale à l'intérieur de l'adhésif 12. Par exemple, si les bandes conductrices 16 présentent de meilleures performances barrières que les bandes électriquement isolantes 17, il est avantageux de modifier l'agencement des bandes 16 et 17 pour rendre plus difficile une diffusion latérale à travers les bandes isolantes 17. Une configuration opposée peut être réalisée si les bandes électriquement isolantes sont plus performantes que les bandes électriquement conductrices sur les propriétés barrières.

Pour réaliser l'étape (iv), le film barrière 11 et le film adhésif 12 peuvent être, selon un premier mode de réalisation, assemblés ensemble avant d'être solidarisé avec le substrat. Dans ce cas là, la couche d'encapsulation 13 est reportée en une seule étape sur le substrat.
Selon un autre mode de réalisation, l'assemblage de la couche d'encapsulation 13 se fait en deux reports successifs : une première étape pour reporter le film adhésif 12 et une seconde étape pour reporter le film barrière 11.
Le film adhésif 12 est solidarisé, dans un premier temps, avec le substrat. Le film barrière 11 est assemblé, solidarisé ultérieurement sur le film adhésif 12.

Le report de la couche d'encapsulation 13 en une seule étape nécessite préalablement de solidariser le film adhésif 12 avec le film barrière 11, afin de former la couche d'encapsulation. La couche d'encapsulation sera ensuite reportée sur le substrat 1.

Le film adhésif 12, formé de bandes adhésives conductrices et isolantes juxtaposées les unes aux autres, peut être associé au film barrière 11 par dispense, laminage ou encore par enduction, de manière à former la couche d'encapsulation 13.
Préférentiellement, la partie barrière et la partie adhésive sont assemblées par laminage.

La couche d'encapsulation 13 obtenue est représentée à la figure 6.
La couche d'encapsulation 13 est configurée pour encapsuler au moins un empilement de couches actives 2 du dispositif électrochimique, disposé sur un substrat 1. La couche d'encapsulation 13 comprend un empilement de couches comportant au moins :
- un film barrière 11 présentant au moins une face électriquement isolante et comprenant au moins une couche étanche vis-à-vis des espèces oxydantes,
- un film adhésif 12, muni d'une première face et d'une deuxième face, la première face étant en contact avec la face électriquement isolante du film barrière 11, le film adhésif 12 comprenant une juxtaposition de bandes électriquement conductrices adhésives 16 et de bandes électriquement isolantes adhésives 17.
Au moins une première et une seconde bandes de matériau électriquement conducteur sont séparées par au moins une bande de matériau électriquement isolant, la première et la seconde bandes de matériau électriquement conducteur étant électriquement isolées l'une de l'autre.

La couche d'encapsulation 13 est, avantageusement, autoportée et conformable pour pouvoir absorber le relief des composants disposés sur le substrat.
Par autoporté, on entend un élément qui se maintient mécaniquement d'une seule pièce lors des manipulations. La couche d'encapsulation, préparée indépendamment des couches actives, peut être rapportée sur les couches actives.
Par conformable, on entend que la couche d'encapsulation présente une épaisseur sensiblement uniforme.

Selon le mode de réalisation préférentiel, la couche d'encapsulation, aussi appelée système ou élément d'encapsulation, possède une épaisseur totale entre 30*µ*m et 100*µ*m.
Les propriétés thermiques (résistance et coefficient de dilatation), d'élasticité (Module de Young) et de flexibilité du film adhésif 12 et du film barrière 11 sont, avantageusement, comparables pour éviter d'éventuelles déformations du système d'encapsulation lors des procédés de report.
Par comparable, on entend, par exemple, que les coefficients de dilatation du film adhésif 12 et du film barrière 11 n'excèdent pas de plus de 5%.
Les propriétés de compressibilité des deux parties sont également, avantageusement, équivalentes afin d'éviter une possible rupture d'adhésion entre la partie adhésive et la partie film barrière 11 ou bien entre la partie adhésive et les dispositifs à encapsuler lors du report de la couche d'encapsulation 13.
Par équivalente, on entend que les propriétés de compressibilité ne diffèrent pas de plus de 5%.

Selon un mode de réalisation particulier, la couche d'encapsulation 13 peut comporter, avant d'être assemblée sur le substrat hôte 1, un film de protection 21 (figure 6). Le film de protection 21 est disposé sur le film adhésif 12. Le film de protection 21, aussi appelé « liner », permet, avantageusement, de consolider mécaniquement la couche d'encapsulation 13, notamment lors des opérations de manipulation, avant l'étape de report, et de protéger le film adhésif 12.
Le film de protection 21 est retiré avant le report de la couche d'encapsulation 13 sur le substrat hôte 1.
Le film de protection 21 est chimiquement inactif vis-à-vis du film adhésif 12.
Le film de protection est, par exemple, un film en matériau polymère. Par exemple, il peut s'agir d'un film en PEN (polyethylènenaphtalate), PP (polypropylène), PET (polyéthylènetéréphtalate), PC (Polycarbonate), PI (Polyimide), PES (polyethersulphone). Il présente une épaisseur de quelques dizaines de microns.

La couche d'encapsulation 13 est, par exemple, formée d'un empilement comprenant :
- un film barrière 11 formé d'un bicouche aluminium/PET,
- un film adhésif 12 formé d'une juxtaposition de bandes électriquement conductrices 16 et isolantes Tesa60260/Tesa61562,
- un film de protection 21.
La couche d'encapsulation 13 présente une épaisseur totale de l'ordre de 55*µ*m.

Selon un mode de réalisation particulier, la couche d'encapsulation 13 comporte des pièges d'espèces oxydantes pour améliorer et limiter la problématique de permutation latérale de la partie adhésive.

La couche d'encapsulation 13 est ensuite reportée sur le substrat de manière à encapsuler les couches actives.
La couche d'encapsulation, formée du film barrière et du film adhésif, est solidarisée avec le substrat par laminage ou par une technique de scellement. On entend par scellement, le report de la couche d'encapsulation sur le substrat avec un collage au moins partiel de la couche sur le substrat, par exemple par une soudure associée à une compression, à une thermocompression ou à un traitement UV.

Préférentiellement, la couche d'encapsulation 13 est solidarisée au substrat avec un procédé de laminage. Ce procédé permet d'assembler efficacement les différents éléments imbriqués. Il peut être réalisé sous vide ou bien sous atmosphère contrôlée. Cette étape peut être, par exemple, réalisée en boîte à gants, les taux d'humidité et d'oxygène étant inférieurs à 5ppm, ou encore en salle blanche anhydre.
Les conditions de laminage seront ajustées en fonction de la nature des adhésifs utilisés.
Par exemple, l'assemblage entre une couche d'encapsulation 13 en aluminium/PET/adhésifs et les composants actifs peut être réalisé à une température de 90°C avec une pression supérieure à 1 bar et une vitesse inférieure à 3 m/mn.

Selon un autre mode de réalisation, la couche d'encapsulation 13 est solidarisée au substrat par réticulation du film adhésif 12.
Le film adhésif 12 de la couche d'encapsulation 13 peut être, dans ce cas, un polymère liquide. Des bandes de polymère liquides, isolantes et conductrices, sont déposées alternativement sur le film barrière 11, par exemple par enduction.
La couche d'encapsulation 13 est reportée sur le substrat. Le film adhésif 12 est ensuite réticulé par insolation sous UV ou par un traitement thermiquement de manière à solidariser la couche d'encapsulation 13 avec le substrat hôte 1.
Le film barrière 11 est, dans cette configuration, transparent aux rayons UV.

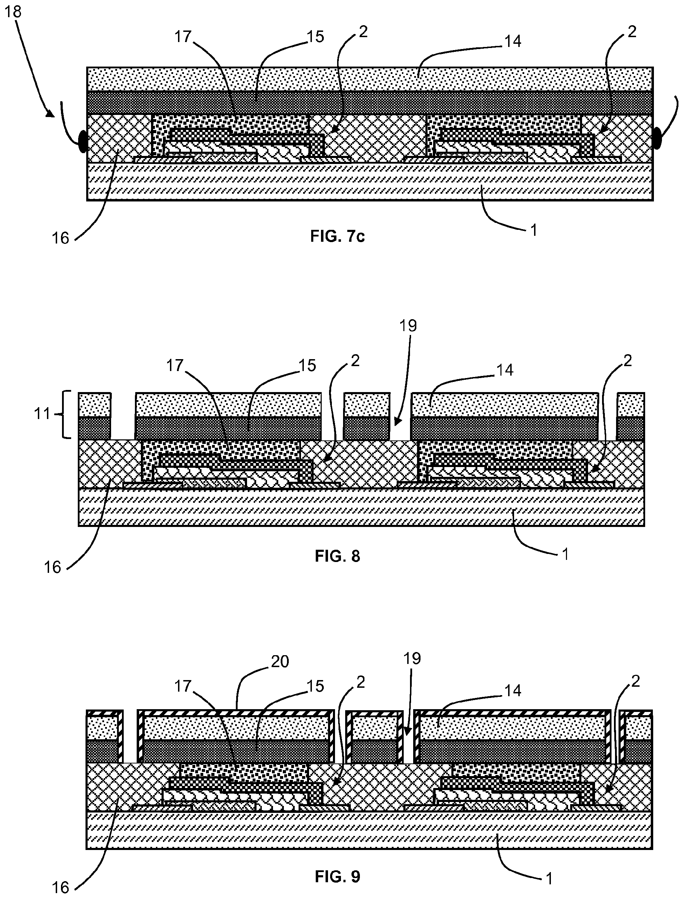

La microbatterie obtenue est représentée sur les figures 7a, b et c.
Après avoir solidarisé la couche d'encapsulation 13 avec le substrat, des reprises de contact 18 sont positionnées au niveau des faces latérales des bandes électriquement conductrices. La possibilité de déporter les contacts, en dehors des zones actives, autorise la réalisation de connexions externes d'un ensemble de batteries avec d'autres dispositifs microélectroniques.
Les figures 7a, 7b et 7c représentent différents modes de réalisation alternatifs dans lesquels la couche électriquement isolante recouvrent soit totalement soit partiellement les flancs des couches actives.
Le mode de réalisation de la figure 7a correspond, avantageusement, au cas où les bandes électriquement conductrices sont des films anisotropiques présentant une conduction verticale.
Dans les autres cas (figures 7b et 7c), au moins un des flancs de chaque empilement de couches actives est entièrement recouvert, protégé par une bande électriquement isolante, de manière à éviter les court-circuits au sein du dispositif.
Comme représenté à la figure 7b, les flancs latéraux des empilements de couches actives sont entièrement recouverts par une bande électriquement isolante.

Selon un mode de réalisation préférentiel, le procédé comporte une étape additionnelle (iii) consistant à texturer au moins le film barrière 11, et plus particulièrement, à former des ouvertures traversantes 19 à travers le film barrière 11. Les ouvertures traversantes 19 peuvent être de différentes tailles et de différentes formes.
Comme représenté à la figure 8, deux microbatteries sont représentées en coupe. Les ouvertures 19 traversent partiellement la couche d'encapsulation 13.

Sur la figure 8, les microbatteries sont montées en série. L'anode de la première microbatterie est connectée à la cathode de la seconde microbatterie par la bande électriquement conductrice disposée au centre de la figure.
Les ouvertures 19 formées à travers la couche barrière permettent de réaliser une reprise de contact, à travers lesdites ouvertures 19, au niveau de l'empilement de couches actives, et d'accéder ainsi aux première et seconde électrodes de l'empilement de couches actives.

Les bandes électriquement conductrices, accessibles à travers les ouvertures 19 traversant la couche barrière, sont utilisées pour réaliser les reprises de contact.
Pour réaliser une telle configuration, les bandes adhésives isolantes et conductrices, formant le film adhésif 12, sont autoportées par laminage ou scellement sur le substrat hôte 1 avant de reporter le film barrière 11 préalablement texturé, en respectant l'emplacement des plages de contact des dispositifs sur le substrat hôte 1.
Alternativement, le film barrière peut être structuré après avoir été assemblé avec le substrat.

Les ouvertures 19 sont, avantageusement, en périphérie du dispositif. Le fait de déporter la reprise de contact en périphérie, en particulier lorsque plusieurs empilements sont disposés sur le même substrat, permet une meilleure intégration 3D tout en autorisant le report d'autres composants sur la couche d'encapsulation. Ces ouvertures sont positionnées en regard d'au moins une bande conductrices et/ou d'au moins un collecteur de courant suivant le routage électrique réalisé du dispositif.
La périphérie peut être située à quelques millimètres, par exemple de 1 à 10 mm, de l'empilement de couches actives, au niveau des collecteurs de courant. La géométrie de la périphérie sera choisie par l'homme du métier de manière à pouvoir réaliser les étapes d'intégration, comme la soudure, avec d'autres dispositifs sans altérer les propriétés électrochimiques des batteries.

Selon un autre mode de réalisation préférentiel, représenté sur la figure 9, une couche électriquement isolante 20 est déposée sur la couche barrière texturée. Les flancs des ouvertures sont, avantageusement, à la fois isolés électriquement et protégés des oxydants atmosphériques et de l'humidité.
La protection latérale est, par exemple, améliorée en déposant une couche à base d'alumine ou une couche d'alumine de quelques nanomètres d'épaisseur. Il peut s'agir, par exemple, d'un dépôt très conforme réalisé à basse température par des techniques de dépôt adaptées comme le dépôt de couches minces atomiques (ou ALD pour « Atomic Layer Deposition »). Par basse température, on entend des températures inférieures à 100°C. La température optimale du procédé ALD est de l'ordre de 80°C.
La couche électriquement isolante 20 forme, avantageusement, une isolation électrique si le film barrière 11 comporte une ou plusieurs couches électriquement conductrices, telles que des couches métalliques.

Préférentiellement, l'épaisseur de la couche électriquement isolante 20 est comprise entre 10nm et 50nm.
La couche d'alumine peut être déposée avant ou après l'étape d'assemblage.

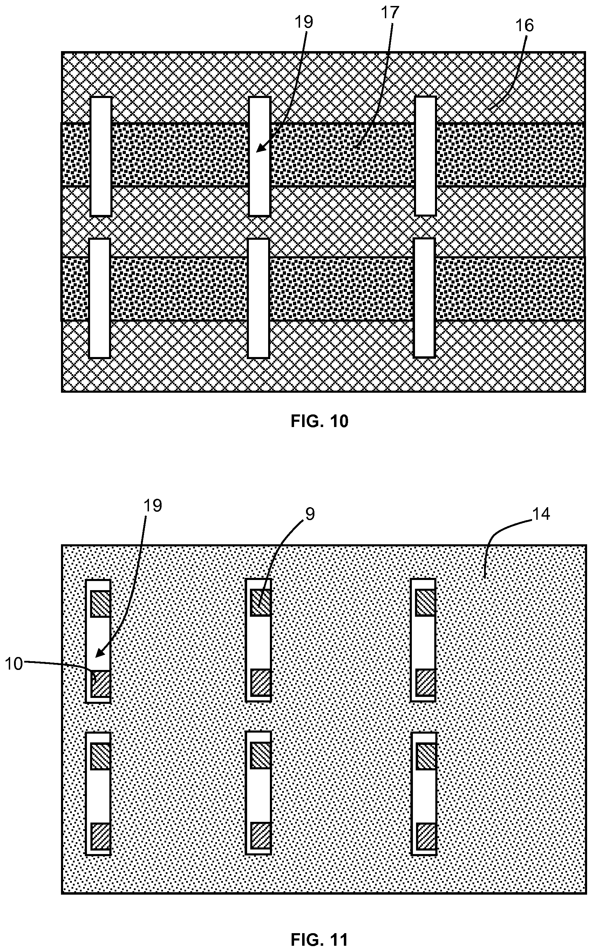

Selon un autre mode de réalisation particulier, les ouvertures traversantes 19 sont réalisées à travers toute l'épaisseur de la couche d'encapsulation. Les ouvertures traversent non seulement le film barrière mais également le film adhésif 12. Toute l'épaisseur de la couche d'encapsulation 13 est ainsi structurée. La figure 10 représente en vue de dessous une couche d'encapsulation 13 munie d'ouvertures traversantes 19.
Une fois la couche d'encapsulation 13 reportée sur le substrat hôte 1, les ouvertures traversantes 19 forment un accès aux collecteurs de courant 9, 10 des microbatteries, ce qui facilite la formation des contacts électriques.
La figure 11 représente un substrat hôte 1 muni de six batteries unitaires et sur lequel a été reporté une couche d'encapsulation 13. La couche d'encapsulation est munie d'ouvertures traversantes 19.
L'étape d'alignement entre la couche d'encapsulation 13 et le substrat hôte 1 est facilitée par la correspondance géométrique entre les ouvertures et les collecteurs de courant 9, 10. Les ouvertures 19 sont utilisées pour aligner la couche d'encapsulation, et donc les bandes conductrices et isolantes, avec les différents composants du substrat lors de l'étape de report.

Avantageusement, ces ouvertures permettent de chasser l'air lors de l'assemblage. La formation de bulles, entre la couche d'encapsulation 13 et les couches actives, est ainsi évitée et l'adhésion entre la couche d'encapsulation 13 et le substrat hôte 1 est améliorée. Les performances de la microbatterie ainsi que sa durée de vie sont ainsi augmentées.

La formation des ouvertures peut être réalisée par des techniques de gravure localisée, comme un procédé laser ou un procédé de retrait mécanique.

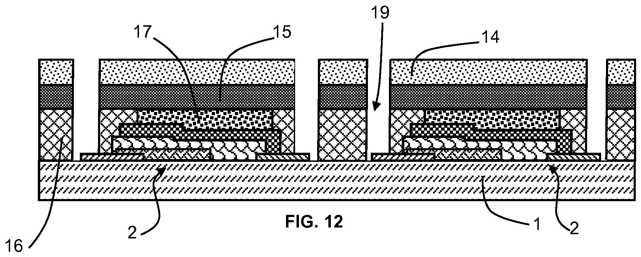

La figure 12 est une vue en coupe d'une ligne de deux batteries encapsulées par une couche d'encapsulation 13. La couche d'encapsulation comprend un film barrière 11 bicouche en aluminium et en PET et un film barrière 11 en adhésifs conducteurs et isolants. Les ouvertures 19 traversent totalement la couche d'encapsulation 13.
La présence des ouvertures traversantes 19 offre la possibilité de former des contacts électriques géométriquement déportés par rapport aux éléments actifs. Cet avantage facilite les procédés d'assemblage et d'intégration des batteries avec des circuits externes.

Il est ainsi possible de coupler les opérations d'encapsulation et d'assemblage d'un ensemble de batteries à l'aide d'un seul procédé effectué sur le même substrat hôte 1 contenant les différents éléments actifs, connectés en série ou en parallèle.

La couche d'encapsulation 13 obtenue présente :
- de bonnes performances barrières : le niveau barrière recherché est inférieur à 10⁻⁴ et 10⁻⁵ g/m²/jour,
- une bonne tenue mécanique : la couche d'encapsulation présente, avantageusement, un module d'Young inférieur à 5GPa pour pouvoir accommoder les variations volumiques de la microbatterie, lors des cycles de charge et de décharge. Autrement, l'expansion ou la contraction de la microbatterie pourrait entraîner des dommages mécaniques dans les électrodes, se traduisant par une diminution irréversible de la capacité électrique
- une compatibilité physico-chimique avec les matériaux contenant du lithium. La formation de la couche d'encapsulation 13 n'endommage pas les couches actives.

Selon un autre mode de réalisation, le dispositif électrochimique est un système électrochrome.
Le système électrochrome "tout solide" se présente sous forme d'un empilement de couches minces solides sur un substrat 1 (figure 3). En particulier, le dispositif électrochrome comporte, successivement à partir du substrat 1, une contre-électrode 7, un électrolyte conducteur ionique 8, une électrode active électrochrome 6.

L'électrode active électrochromique est formée d'un matériau électrochrome en mesure d'insérer, réversiblement et simultanément, des ions et des électrons. Sous l'effet d'une différence de potentiel appliquée entre l'électrode active et la contre-électrode, les ions s'insèrent dans le matériau électrochrome de l'électrode active pour donner une coloration persistante de l'état d'oxydation correspondant. En appliquant une polarisation inverse, les ions se désinsèrent de l'électrode active qui revient à son état d'oxydation initial, coloré ou transparent.

Les états d'oxydation du matériau électrochrome correspondent, par conséquent, aux états insérés et désinsérés et sont d'une coloration distincte lorsqu'ils sont soumis à une alimentation électrique appropriée.
Avant l'application de la différence de potentiel, la couleur affichée est celle du substrat, obtenue par transmittance à travers l'empilement. Après application d'une différence de potentiel entre l'électrode active et la contre-électrode, un affichage d'une couleur différente correspondant à celui du matériau électrochrome de l'électrode active est obtenu.

La couche d'encapsulation 13 est, dans le cas des systèmes électrochromes, transparente à la lumière.

L'électrode active 6 et/ou la contre-électrode 4 est une électrode en oxyde de tungstène, en oxyde d'iridium, en oxyde de vanadium ou en oxyde de molybdène.

L'électrode active 6 est, préférentiellement, en oxyde de tungstène, ou en oxyde de molybdène.

La couche solide d'électrolyte conducteur ionique 8 est à base de lithium, par exemple, en nitrure de lithium (Li₃N), LiPON, LiSiPON, ou encore en LiBON etc...

L'ion spécifique est, avantageusement, l'ion lithium Li⁺. L'ion Li⁺ présente une mobilité supérieure aux autres ions comme le sodium ou l'argent du fait de la petite taille de l'ion lithium, diminuant le temps de réponse du système électrochrome.

La contre-électrode 7, est par exemple, en oxyde d'iridium, en oxyde de vanadium.

La couche d'encapsulation 13 peut être déposée avec le même procédé sur le dispositif électrochrome.

Grâce au procédé d'encapsulation, précédemment décrit, il est possible de réaliser une de protection simultanée et groupée d'un ensemble de composants à base de lithium (microbatterie et/ou dispositif électrochrome) par un système d'encapsulation.

Le procédé d'encapsulation est efficace et compatible avec les cadences de production grande volume permettant ainsi d'encapsuler un maximum de composants de manière simultanée.
Comme il est possible de déporter les contacts électriques des composants par rapport à l'emplacement des couches actives sur le substrat hôte, les opérations d'intégration et d'interconnectivité sont facilitées par rapport aux procédés couramment employés.
Il est possible d'encapsuler et d'assembler plusieurs microbatteries au lithium du même type, disposées en série ou en parallèle. Le procédé d'encapsulation des batteries en série ou en parallèle reste identique.
L'interconnexion de plusieurs batteries unitaires permet, avantageusement, de moduler la puissance électrique du système obtenu par augmentation de la tension de sortie et/ou de la capacité de décharge.
L'empilement autoporté peut aussi être appliqué sur une combinaison de microbatteries interconnectées avec d'autres dispositifs microélectroniques (électrochromes, photovoltaïques,....) réalisés sur le même substrat hôte. Cet avantage répond particulièrement à la problématique de réalisation des systèmes autonomes multifonctionnels. Il est encore possible de prévoir que les bornes électriquement conductrices servent à connecter électriquement une ou plusieurs batteries avec une charge électrique par exemple un dispositif microélectronique tel qu'un circuit imprimé, un micromoteur, un dispositif émetteur de lumière ou récepteur de lumière. A titre d'exemple, les batteries peuvent être assemblées dans le bracelet d'une montre et sont connectés de manière à alimenter la montre en électricité, par exemple son moteur et/ou ses circuits intégrés.

## Revendications

1. Dispositif électrochimique, tel qu'une microbatterie ou un système électrochrome, comprenant au moins un empilement de couches actives (2) contenant du lithium,
ledit empilement comprenant au moins une première électrode reliée à un premier collecteur de courant et au une moins seconde électrode reliée à un second collecteur de courant,
ledit empilement (2) étant disposé sur un substrat (1) et étant recouvert d'une couche d'encapsulation (13),
**caractérisé en ce que** la couche d'encapsulation (13) comporte au moins :
- un film barrière (11) présentant au moins une face électriquement isolante et comprenant au moins une couche étanche vis-à-vis des espèces oxydantes,
- un film adhésif (12), muni d'une première face et d'une deuxième face, la première face étant en contact avec la face électriquement isolante du film barrière (11) et la seconde face recouvrant l'empilement de couches actives (2) et une partie du substrat (1),
le film adhésif (12) comprenant une juxtaposition de bandes électriquement conductrices adhésives (16) et de bandes électriquement isolantes adhésives (17),
deux bandes électriquement conductrices étant séparées par une bande électriquement isolante pour être isolées électriquement l'une de l'autre, chaque bande électriquement conductrice étant connectée au premier collecteur de courant ou au second collecteur de courant de l'empilement de couches actives (2).

2. Dispositif selon la revendication 1, **caractérisé en ce que** la couche d'encapsulation (13) comprend des ouvertures (19) traversant au moins le film barrière (11), de manière à permettre une reprise de contact à travers les ouvertures (19), les ouvertures étant, avantageusement, en périphérie du dispositif.

3. Dispositif selon l'une des revendications 1 et 2, **caractérisé en ce que** le film barrière (11) est formé d'une couche ou de plusieurs couches, la ou les couches étant en métal ou en matériau diélectrique, la première couche dudit film étant formée par une couche en matériau diélectrique .

4. Dispositif selon l'une des revendications 1 à 3, **caractérisé en ce que** les bandes électriquement conductrices (16) sont en polymère conducteur adhésif.

5. Dispositif selon la revendication 4 **caractérisé en ce que** les bandes électriquement conductrices (16) sont en polymère conducteur adhésif , ledit polymère conducteur étant choisi parmi le polyacétylène, le polythiophène, le polypyrole, et le polysulfure de phénylène, ou un polymère isolant dopé avec des charges métalliques ou carbonées conductrices.

6. Dispositif selon l'une des revendications 1 à 5, **caractérisé en ce que** les bandes électriquement isolantes adhésives sont choisies parmi des matériaux thermoplastiques ou durcissables par traitement UV ou thermique.

7. Dispositif selon l'une quelconque des revendications 1 à 6, **caractérisé en ce que** le film adhésif (12) comporte des pièges d'espèces oxydantes.

8. Dispositif selon l'une quelconque des revendications 1 à 7, **caractérisé en ce que** la couche d'encapsulation (13) a une épaisseur comprise entre 30*µ*m et 100*µ*m.

9. Dispositif selon l'une quelconque des revendications 1 à 8, **caractérisé en ce que** le film barrière (11) est recouvert d'une couche électriquement isolante (20).

10. Dispositif selon l'une quelconque des revendications 1 à 9, **caractérisé en ce que** le dispositif électrochimique comporte plusieurs empilements de couches actives disposés sur le substrat (1),
chaque bande électriquement conductrice connectant un premier collecteur de courant d'un empilement de couches actives avec un deuxième collecteur de courant d'un autre empilement de couches actives, de manière à connecter en série lesdits empilements de couches actives.

11. Dispositif selon l'une quelconque des revendications 1 à 9, **caractérisé en ce que** le dispositif électrochimique comporte plusieurs empilements de couches actives disposés sur le substrat (1),
la première bande électriquement conductrice connectant les premiers collecteurs de courant des empilements de couches actives,
la seconde bande électriquement conductrice connectant les second collecteurs de courant des empilements de couches actives,
de manière à connecter en parallèle les empilements de couches actives.

12. Procédé de réalisation d'un dispositif électrochimique, tel qu'une microbatterie ou un système électrochrome, comprenant les étapes successives suivantes :
- fournir un substrat (1) sur lequel est disposé au moins un empilement de couches actives (2), ledit empilement (2) comprenant au moins une première électrode reliée à un premier collecteur et au moins une seconde électrode reliée à un second collecteur,
- fournir un film barrière (11) et un film adhésif (12)
∘ le film barrière (11) présentant au moins une face électriquement isolante et comprenant au moins une couche étanche vis-à-vis des espèces oxydantes,
∘ le film adhésif (12) étant muni d'une première face et d'une deuxième face,
le film adhésif (12) comprenant une juxtaposition de bandes électriquement conductrices adhésives (16) et de bandes électriquement isolantes adhésives (17),
deux bandes électriquement conductrices étant séparées par une bande électriquement isolante pour être isolées électriquement l'une de l'autre,
- solidariser le film barrière (11) et le film adhésif (12) avec le substrat (1), de manière à encapsuler l'empilement de couches actives (2), le film barrière (11) et le film adhésif (12) formant une couche d'encapsulation (13),
la première face du film adhésif (12) étant en contact avec la face électriquement isolante du film barrière (11) et la seconde face du film adhésif (12) étant destinée à être en contact en partie avec le substrat (1),
le film adhésif (12) recouvrant l'empilement de couches actives (2) et une partie du substrat (1),
chaque bande de matériau électriquement conducteur étant connectée au premier collecteur de courant ou au second collecteur de courant de l'empilement de couches actives (2).

13. Procédé selon la revendication 12, **caractérisé en ce que** le film barrière (11) et le film adhésif (12) sont assemblés ensemble avant d'être solidarisés avec le substrat (1).

14. Procédé selon la revendication 12, **caractérisé en ce que** le film adhésif (12) est solidarisé, dans un premier temps, avec le substrat (1) et **en ce que** le film barrière (11) est assemblé ultérieurement sur le film adhésif (12).

15. Procédé selon l'une quelconque des revendications 12 à 14, **caractérisé en ce que** le substrat (1) comporte plusieurs empilements de couches actives (2) et **en ce qu'**une même couche d'encapsulation (13) est disposée simultanément sur les empilements.

16. Procédé selon l'une quelconque des revendications 12 à 15, **caractérisé en ce que** le procédé comporte une étape de texturation au moins du film barrière de manière à former des ouvertures (19) traversant le film barrière (11).

17. Procédé selon la revendication 16, **caractérisé en ce que** l'étape de texturation est suivie d'une étape de dépôt d'une couche électriquement isolante (20) de manière à recouvrir les flancs des ouvertures (19) formées au moins dans le film barrière (11).

18. Procédé selon la revendication 17, **caractérisé en ce que** la couche électriquement isolante (20) est en alumine.

19. Procédé selon l'une quelconque des revendications 12 à 18, **caractérisé en ce que** le film barrière (11) et le film adhésif (12) sont solidarisés avec le substrat (1) par laminage ou par une technique de scellement.

20. Procédé selon l'une quelconque des revendications 12 à 19, **caractérisé en ce que** le film barrière (11) est formé d'une couche aluminium et d'une couche de polymère.

21. Procédé selon l'une quelconque des revendications 12 à 20, **caractérisé en ce que** les bandes électriquement conductrices (16) sont en polymère conducteur adhésif.

22. Procédé selon la revendication 21, **caractérisé en ce que** les bandes électriquement conductrices (16) sont en polymère conducteur adhésif, ledit polymère conducteur étant choisi parmi le polyacétylène, le polythiophène, le polypyrole, et le polysulfure de phénylène, ou un polymère isolant dopé avec des charges métalliques ou carbonées conductrices.

23. Procédé selon l'une quelconque des revendications 12 à 22, **caractérisé en ce que** les bandes électriquement isolantes adhésives sont choisies parmi des matériaux thermoplastiques ou durcissables par traitement UV ou thermique.

24. Procédé selon l'une quelconque des revendications 12 à 23, **caractérisé en ce que** le film adhésif (12) comporte des pièges d'espèces oxydantes.

## Patentansprüche

1. Elektrochemische Vorrichtung, wie eine Mikrobatterie oder ein elektrochromes System, umfassend wenigstens einen Stapel aus Lithium enthaltenden aktiven Schichten (2),
wobei der Stapel wenigstens eine erste Elektrode, die mit einem ersten Stromkollektor verbunden ist, und wenigstens eine zweite Elektrode, die mit einem zweiten Stromkollektor verbunden ist, umfasst,
wobei der Stapel (2) auf einem Substrat (1) angeordnet und von einer Einkapselungsschicht (13) bedeckt ist,
**dadurch gekennzeichnet, dass** die Einkapselungsschicht (13) wenigstens umfasst:
- einen Barrierefilm (11), der wenigstens eine elektrisch isolierende Seite aufweist und wenigstens eine gegenüber oxidierenden Spezies dichte Schicht umfasst,
- einen Haftfilm (12), der mit einer ersten Seite und mit einer zweiten Seite versehen ist, wobei die erste Seite mit der elektrisch isolierenden Seite des Barrierefilms (11) in Kontakt ist und wobei die zweite Seite den Stapel aus aktiven Schichten (2) und einen Teil des Substrats (1) bedeckt,
wobei der Haftfilm (12) eine Nebeneinanderanordnung von elektrisch leitenden Klebestreifen (16) und von elektrisch isolierenden Klebestreifen (17) umfasst,
wobei zwei elektrisch leitende Streifen durch einen elektrisch isolierenden Streifen getrennt sind, um voneinander elektrisch isoliert zu sein,
wobei jeder elektrisch leitende Streifen mit dem ersten Stromkollektor oder mit dem zweiten Stromkollektor des Stapels aus aktiven Schichten (2) verbunden ist.

2. Vorrichtung nach Anspruch 1, **dadurch gekennzeichnet, dass** die Einkapselungsschicht (13) Öffnungen (19) umfasst, die wenigstens den Barrierefilm (11) durchqueren, um eine Kontaktierung durch die Öffnungen (19) zu ermöglichen, wobei die Öffnungen sich vorteilhafterweise am Umfang der Vorrichtung befinden.

3. Vorrichtung nach einem der Ansprüche 1 und 2, **dadurch gekennzeichnet, dass** der Barrierefilm (11) von einer Schicht oder von mehreren Schichten gebildet ist, wobei die Schicht oder Schichten aus Metall oder aus dielektrischem Material bestehen, wobei die erste Schicht des Films durch eine Schicht aus dielektrischem Material gebildet ist.

4. Vorrichtung nach einem der Ansprüche 1 bis 3, **dadurch gekennzeichnet, dass** die elektrisch leitenden Streifen (16) aus haftendem leitfähigem Polymer bestehen.

5. Vorrichtung nach Anspruch 4, **dadurch gekennzeichnet, dass** die elektrisch leitenden Streifen (16) aus haftendem leitfähigem Polymer bestehen, wobei das leitfähige Polymer aus Polyacetylen, Polythiophen, Polypyrrol, und Polyphenylensulfid, oder einem isolierenden Polymer, das mit leitfähigen metallischen oder kohlenstoffhaltigen Füllstoffen dotiert ist, ausgewählt ist.

6. Vorrichtung nach einem der Ansprüche 1 bis 5, **dadurch gekennzeichnet, dass** die elektrisch isolierenden Klebestreifen aus thermoplastischen oder durch UV- oder Wärmebehandlung härtbaren Materialien ausgewählt sind.

7. Vorrichtung nach einem der Ansprüche 1 bis 6, **dadurch gekennzeichnet, dass** der Haftfilm (12) Fallen für oxidierende Spezies umfasst.

8. Vorrichtung nach einem der Ansprüche 1 bis 7, **dadurch gekennzeichnet, dass** die Einkapselungsschicht (13) eine Dicke zwischen 30 µm und 100 µm aufweist.

9. Vorrichtung nach einem der Ansprüche 1 bis 8, **dadurch gekennzeichnet, dass** der Barrierefilm (11) von einer elektrisch isolierenden Schicht (20) bedeckt ist.

10. Vorrichtung nach einem der Ansprüche 1 bis 9, **dadurch gekennzeichnet, dass** die elektrochemische Vorrichtung mehrere Stapel aus aktiven Schichten umfasst, die auf dem Substrat (1) angeordnet sind,
wobei jeder elektrisch leitende Streifen einen ersten Stromkollektor eines Stapels aus aktiven Schichten mit einem zweiten Stromkollektor eines weiteren Stapels aus aktiven Schichten verbindet, um die Stapel aus aktiven Schichten in Reihe zu verbinden.

11. Vorrichtung nach einem der Ansprüche 1 bis 9, **dadurch gekennzeichnet, dass** die elektrochemische Vorrichtung mehrere Stapel aus aktiven Schichten umfasst, die auf dem Substrat (1) angeordnet sind,
wobei der erste elektrisch leitende Streifen die ersten Stromkollektoren der Stapel aus aktiven Schichten verbindet,
wobei der zweite elektrisch leitende Streifen die zweiten Stromkollektoren der Stapel aus aktiven Schichten verbindet,
um die Stapel aus aktiven Schichten parallel zu verbinden.

12. Verfahren zur Herstellung einer elektrochemischen Vorrichtung, wie einer Mikrobatterie oder eines elektrochromen Systems, das die folgenden aufeinanderfolgenden Schritte umfasst:
- Bereitstellen eines Substrats (1), auf dem wenigstens ein Stapel aus aktiven Schichten (2) angeordnet ist, wobei der Stapel (2) wenigstens eine erste Elektrode, die mit einem ersten Kollektor verbunden ist, und wenigstens eine zweite Elektrode, die mit einem zweiten Kollektor verbunden ist, umfasst,
- Bereitstellen eines Barrierefilms (11) und eines Haftfilms (12),
∘ wobei der Barrierefilm (11) wenigstens eine elektrisch isolierende Seite aufweist und wenigstens eine gegenüber oxidierenden Spezies dichte Schicht umfasst,
∘ wobei der Haftfilm (12) mit einer ersten Seite und mit einer zweiten Seite versehen ist,
wobei der Haftfilm (12) eine Nebeneinanderanordnung von elektrisch leitenden Klebestreifen (16) und von elektrisch isolierenden Klebestreifen (17) umfasst,
wobei zwei elektrisch leitende Streifen durch einen elektrisch isolierenden Streifen getrennt sind, um voneinander elektrisch isoliert zu sein,
- festes Verbinden des Barrierefilms (11) und des Haftfilms (12) mit dem Substrat (1), um den Stapel aus aktiven Schichten (2) einzukapseln, wobei der Barrierefilm (11) und der Haftfilm (12) eine Einkapselungsschicht (13) bilden,
wobei die erste Seite des Haftfilms (12) mit der elektrisch isolierenden Seite des Barrierefilms (11) in Kontakt ist und wobei die zweite Seite des Haftfilms (12) dazu bestimmt ist, mit dem Substrat (1) teilweise in Kontakt zu sein,
wobei der Haftfilm (12) den Stapel aus aktiven Schichten (2) und einen Teil des Substrats (1) bedeckt,
wobei jeder Streifen aus elektrisch leitendem Material mit dem ersten Stromkollektor oder mit dem zweiten Stromkollektor des Stapels aus aktiven Schichten (2) verbunden ist.

13. Verfahren nach Anspruch 12, **dadurch gekennzeichnet, dass** der Barrierefilm (11) und der Haftfilm (12) miteinander verbunden werden, bevor sie mit dem Substrat (1) fest verbunden werden.

14. Verfahren nach Anspruch 12, **dadurch gekennzeichnet, dass** der Haftfilm (12) in einem ersten Schritt fest mit dem Substrat (1) verbunden wird und dass der Barrierefilm (11) später an den Haftfilm (12) angefügt wird.

15. Verfahren nach einem der Ansprüche 12 bis 14, **dadurch gekennzeichnet, dass** das Substrat (1) mehrere Stapel aus aktiven Schichten (2) umfasst und dass eine gleiche Einkapselungsschicht (13) gleichzeitig auf den Stapeln angeordnet wird.

16. Verfahren nach einem der Ansprüche 12 bis 15, **dadurch gekennzeichnet, dass** das Verfahren einen Schritt zum Texturieren wenigstens des Barrierefilms umfasst, um Öffnungen (19), welche den Barrierefilm (11) durchqueren, zu bilden.

17. Verfahren nach Anspruch 16, **dadurch gekennzeichnet, dass** sich an den Texturierungsschritt ein Schritt zum Abscheiden einer elektrisch isolierenden Schicht (20) anschließt, um die Flanken der wenigstens in dem Barrierefilm (11) ausgebildeten Öffnungen (19) zu überziehen.

18. Verfahren nach Anspruch 17, **dadurch gekennzeichnet, dass** die elektrisch isolierende Schicht (20) aus Aluminiumoxid besteht.

19. Verfahren nach einem der Ansprüche 12 bis 18, **dadurch gekennzeichnet, dass** der Barrierefilm (11) und der Haftfilm (12) mit dem Substrat (1) durch Laminieren oder durch eine Siegelungstechnik fest verbunden werden.

20. Verfahren nach einem der Ansprüche 12 bis 19, **dadurch gekennzeichnet, dass** der Barrierefilm (11) von einer Aluminiumschicht und von einer Polymerschicht gebildet ist.

21. Verfahren nach einem der Ansprüche 12 bis 20, **dadurch gekennzeichnet, dass** die elektrisch leitenden Streifen (16) aus haftendem leitfähigem Polymer bestehen.

22. Verfahren nach Anspruch 21, **dadurch gekennzeichnet, dass** die elektrisch leitenden Streifen (16) aus haftendem leitfähigem Polymer bestehen, wobei das leitfähige Polymer aus Polyacetylen, Polythiophen, Polypyrrol, und Polyphenylensulfid, oder einem isolierenden Polymer, das mit leitfähigen metallischen oder kohlenstoffhaltigen Füllstoffen dotiert ist, ausgewählt ist.

23. Verfahren nach einem der Ansprüche 12 bis 22, **dadurch gekennzeichnet, dass** die elektrisch isolierenden Klebestreifen aus thermoplastischen oder durch UV- oder Wärmebehandlung härtbaren Materialien ausgewählt sind.

24. Verfahren nach einem der Ansprüche 12 bis 23, **dadurch gekennzeichnet, dass** der Haftfilm (12) Fallen für oxidierende Spezies umfasst.

## Claims

1. An electrochemical device, such as a microbattery or an electrochromic system, comprising at least one stack of active layers (2) containing lithium, said stack comprising at least a first electrode connected to a first current collector and at least a second electrode connected to a second current collector,
said stack (2) being arranged on the substrate (1) and being recovered by an encapsulation layer (13),
**characterized in that** the encapsulation layer (13) comprises at least:
- a barrier film (11) presenting at least one electrically insulating surface and comprising at least one layer hermetic to oxidising species,
- an adhesive film (12), provided with a first surface and a second surface, the first surface being in contact with the electrically insulating surface of the barrier film (11) and the second surface covering a stack of active layers (2) and a part of the substrate (1),
the adhesive film (12) comprising a juxtaposition of electrically conducting adhesive strips (16) and of electrically insulating adhesive strips (17),
two electrically conducting strips being separated by an electrically insulating strip to be electrically insulated from one another,
each electrically conducting strip being connected to the first current collector or to the second current collector of the stack of active layers (2).

2. The device according to claim 1, **characterized in that** the encapsulation layer (13) comprises openings (19) passing through at least the barrier film (11) so as to enable a contact connections to be made through the openings (19), the openings being advantageously located at the periphery of the device.

3. The device according to one of claims 1 and 2, **characterized in that** the barrier film (11) is formed by one or more layers, the one or more layers being made from metal or from dielectric material, the first layer of said film being formed by a layer of dielectric material.

4. The device according to one of claims 1 to 3, **characterized in that** the electrically conducting strips (16) are made from adhesive conducting polymer.

5. The device according to claim 4, **characterized in that** the electrically conducting strips (16) are made from adhesive conducting polymer, said conducting polymer being chosen from polyacetylene, polythiophene, polypyrrole, and phenylene polysulfide, or an insulating polymer doped with metallic or conducting carbonated charges.

6. The device according to one of claims 1 to 5, **characterized in that** the electrically insulating adhesive strips are chosen from thermoplastic materials or materials able to be thermoset by UV or heat treatment.

7. The device according to any one of claims 1 to 6, **characterized in that** the adhesive film (12) comprises oxidising species traps.

8. The device according to any one of claims 1 to 7, **characterized in that** the encapsulation layer (13) has a thickness comprised between 30*µ*m and 100*µ*m.

9. The device according to any one of claims 1 to 8, **characterized in that** the barrier film (11) is covered by an electrically insulating layer (20).

10. The device according to any one of claims 1 to 9, **characterized in that** electrochemical device comprises several stacks of active layers arranged on the substrate (1),
each electrically conducting strip connecting a first current collector of a stack of active layers with a second current collector of another stack of active layers, so as to connect said stacks of active layers in series.

11. The device according to any one of claims 1 to 9, **characterized in that** the electrochemical device comprises several stacks of active layers arranged on the substrate (1),
the first electrically conducting strip connecting the first current collectors of the stacks of active layers,
the second electrically conducting strip connecting the second current collectors of the stacks of active layers,
so as to connect the stacks of active layers in parallel.

12. A fabrication method of an electrochemical device, such as a microbattery or an electrochromic system, comprising the following successive steps:
- providing a substrate (1) on which at least one stack of active layers (2) is arranged, said stack (2) comprising at least a first electrode connected to a first collector and at least a second electrode connected to a second collector,
- providing a barrier film (11) and an adhesive film (12)
∘ the barrier film (11) presenting at least one electrically insulating surface and comprising at least one layer hermetic to oxidising species,
∘ the adhesive film (12) being provided with a first surface and a second surface,
the adhesive film (12) comprising a juxtaposition of electrically conducting adhesive strips (16) and of electrically insulating adhesive strips (17),
two electrically conducting strips being separated by an electrically insulating strip to be electrically insulated from one another,
- securing the barrier film (11) and the adhesive film (12) with the substrate (1), so as to encapsulate the stack of active layers (2) , the barrier film (11) and the adhesive film (12) forming an encapsulation layer (13),
the first surface of the adhesive film (12) being in contact with the electrically insulating surface of the barrier film (11) and the second surface of the adhesive film (12) being designed to be partially in contact with the substrate (1),
the adhesive film (12) covering the stack of active layers (2) and a part of the substrate (1),
each strip of electrically conducting material being connected to the first current collector or to the second current collector of the stack of active layers (2).

13. The method according to claim 12, **characterized in that** the barrier film (11) and the adhesive film (12) are assembled to one another before being secured with the substrate (1).

14. The method according to claim 12, **characterized in that** the adhesive film (12) is secured, in a first step, with the substrate (1) and **in that** the barrier film (11) is subsequently assembled on the adhesive film (12).

15. The method according to any one of claims 12 to 14, **characterized in that** the substrate (1) comprises several stacks of active layers (2) and **in that** a single encapsulation layer (13) is simultaneously arranged on the stacks.

16. The method according to any one of claims 12 to 15, **characterized in that** the method comprises a patterning step at least of the barrier film so as to form openings (19) passing through the barrier film (11).

17. The method according to claim 16, **characterized in that** the patterning step is followed by a deposition step of an electrically insulating layer (20) so as to cover the flanks of the openings (19) formed at least in the barrier film (11).

18. The method according to claim 17, **characterized in that** the electrically insulating layer (20) is made from alumina.

19. The method according to any one of claims 12 to 18, **characterized in that** the barrier film (11) and the adhesive film (12) are secured with the substrate (1) by lamination or by a sealing technique.

20. The method according to any one of claims 12 to 19, **characterized in that** the barrier film (11) is formed by an aluminium layer and by a polymer layer.

21. The method according to any one of claims 12 to 20, **characterized in that** the electrically conducting strips (16) are made from adhesive conducting polymer.

22. The method according to claim 21, **characterized in that** the electrically conducting strips (16) are made from adhesive conducting polymer, said conducting polymer being chosen from polyacetylene, polythiophene, polypyrrole, and phenylene polysulfide, or an insulating polymer doped with metallic or conducting carbonated charges.

23. The method according to any one of claims 12 to 22, **characterized in that** the electrically insulating adhesive strips are chosen from thermoplastic materials or materials able to be thermoset by UV curing or heat treatment.

24. The method according to any one of claims 12 to 23, **characterized in that** the adhesive film (12) comprises oxidising species traps.
